# EUROPÄISCHE PATENTSCHRIFT

(11) **EP 2 864 450 B1**
(45) Veröffentlichungstag und Bekanntmachung des Hinweises auf die Patenterteilung: **07.06.2023**
(21) Anmeldenummer: 13745334.6
(22) Anmeldetag: 19.06.2013
(51) Int. Cl.: C10G 31/06, C10G 3/00, C10G 9/36

(54) **VERFAHREN ZUR THERMISCHEN UMWANDLUNG VON HETEROATOMHALTIGEN ROHÖLEN IN HETEROATOMARME LEICHT- UND MITTELÖLE**
PROCESS FOR THE THERMAL CONVERSION OF CRUDE OILS CONTAINING HETEROATOMS INTO LIGHT OILS AND MIDDLE DISTILLATE OILS HAVING A REDUCED AMOUNT OF HETEROATOMS
PROCÉDÉ DE CONVERSION THERMIQUE DE PÉTROLES BRUTS CONTENANT DES HETEROATOMES EN L'HUILE DE PÉTROLES LÉGERS ET L'HUILE DE DISTILLATS MOYENS COMPORTANT UNE QUANTITÉ RÉDUITE D'HETEROATOMES

(30) Priorität: 20.06.2012 DE 102012012199
(43) Veröffentlichungstag der Anmeldung: 29.04.2015
(73) Patentinhaber: Nexxoil GmbH, 13507 Berlin (DE)
(72) Erfinder: WILLNER, Thomas, 21077 Hamburg (DE)
(74) Vertreter: Jungblut & Seuss
(86) Internationale Anmeldenummer: PCT/DE2013/000318
(87) Internationale Veröffentlichungsnummer: WO 2013/189476

(56) Entgegenhaltungen:
- WO-A1-2008/098358
- WO-A1-2009/006711
- DE-A1-102009 045 399
- US-A- 4 435 272
- US-A1- 2011 184 215

## Beschreibung

Die Erfindung betrifft ein Verfahren zur thermischen Umwandlung von heteroatomhaltigen Rohölen in heteroatomarme Leicht- und/oder Mittelöle als Produkt.

Unter "Heteroatomen" werden hier kohlenwasserstofffremde Atome wie zum Beispiel Sauerstoff, Stickstoff, Schwefel, Phosphor und/oder Halogene verstanden. "Heteroatomhaltig" bezeichnet erfindungsgemäß einen gewissen Gehalt an organisch gebundenen Heteroatomen als Ausgangssituation im Rohöl. "Organisch gebunden" bedeutet erfindungsgemäß "an Kohlenwasserstoffe gebunden". "Heteroarm" meint erfindungsgemäß einen reduzierten Heteroatomgehalt im Produkt, bezogen auf den jeweiligen ursprünglichen Gehalt im Rohöl.

Die Rohstoffseite ist erfindungsgemäß wie folgt definiert:
- Der Begriff "Rohöl" steht für hydrophobe und/oder kohlenwasserstoffhaltige Flüssigkeiten.
- "Hydrophob" steht für "wasserabweisend" bzw. "nicht mischbar mit Wasser", das heißt es bilden sich in Kontakt mit Wasser stets zwei unmischbar getrennt übereinander stehende Flüssigphasen, also eine Ölphase und eine Wasserphase, oder Emulsionen aus.
- Die heteroatomhaltige Rohölen sind heteroatomhaltige Schweröle, Fette, Fettsäuren, Fettsäureverbindungen, heteroatomhaltige Fettbegleitstoffe, Tallöle, Harzsäuren und/oder Gemische aus den genannten Stoffen.
- Beispiele für heteroatomhaltige Schweröle sind Schiffsöle, Öle zur Metallbearbeitung und/oder Schmierstoffe, soweit sie Heteroatome enthalten.
- "Fette" bezeichnet hier alle Triglyceride wie zum Beispiel Pflanzenöle, Pflanzenfette, Tieröle, Tierfette, Algenöle und/oder Algenlipide.
- Beispiele für Fettsäureverbindungen neben besagten Triglyceriden sind Fettsäureester, Monoglyceride, Diglyceride, Phosphatide, Glycolipide, Diollipide, Wachse und/oder Sterinester.
- Beispiele für heteroatomhaltige Fettbegleitstoffe sind Sterine bzw. Sterole, Tocopherole, Tocotrienole und/oder Farbstoffe wie zum Beispiel Chlorophyll.

Die Produktseite ist erfindungsgemäß wie folgt definiert:
- Als Produkte des erfindungsgemäßen Verfahrens entstehen heteroarme Leicht- und/oder Mittelöle und eine nicht kondensierende Gasphase. Zusätzlich kann eine wässrige Phase und/oder ein fester Rückstand entstehen.
- Unter heteroatomarmen Leicht- und/oder Mittelölen werden kohlenwasserstoffreiche organische Flüssigkeiten verstanden, die unter Reaktionsbedingungen verdampfen und jeweils geringere Heteroatomgehalte besitzen als die jeweils eingesetzten Rohöle.
- Typische Kohlenstoffkettenlängen liegen für Leichtöle im Bereich von C5 bis C10 und für Mittelöle im Bereich von C11 bis C25.
- Beispiele für Anwendungsbereiche der Produktöle sind ihr Einsatz als
   - Heizölzumischkomponente,
   - als Heizölersatz,
   - als Zumischkomponenten und/oder Additive von Kraftstoffen wie zum Beispiel Benzin, Diesel und/oder Kerosin,
   - als Ersatz von Kraftstoffen wie z. B. Benzin, Diesel und/oder Kerosin,
   - als Zwischenprodukte für die Aufbereitung zu Kraftstoffkomponenten und/oder Kraftstoffersatz durch verfahrenstechnische Maßnahmen wie z. B. Hydrierung und/oder Desoxygenierung
   - und/oder als Plattformchemikalien für die chemische und/oder pharmazeutische Produktion.

Die der Erfindung zugrunde liegende Idee lässt sich am Beispiel von Fetten bzw. Triglyceriden erklären. Bei dem Versuch, diese Rohstoffe als Erdölersatz zum Beispiel im Kraftstoffbereich, in diesem Falle also insbesondere als Dieselzumischkomponente oder als Dieselersatz, einzusetzen, ist man mit einer Reihe von Problemen und Nachteilen konfrontiert.

Zum einen weisen Fette gegenüber Diesel eine zu hohe Viskosität auf, was zu Problemen bei der Einspritzung und der Verbrennung im Motor führt. Zum anderen haben Sie aufgrund eines relativ hohen Sauerstoffgehaltes von etwa 11 Gew.% einen niedrigeren Energiegehalt als Diesel. Der Heizwert von Diesel liegt bei etwa 42,5 MJ/kg während Fette wie zum Beispiel Rapsöl einen Heizwert von nur etwa 37 MJ/kg aufweisen. Schließlich haben Fette eine schlechtere Kältestabilität als Diesel, d. h. sie flocken bei tiefen Temperaturen z. B. im Winter aus.

Die Umwandlung von Fetten in Fettsäuremethylester, so genannter Biodiesel, reduziert zwar die Viskosität fast bis auf Dieselniveau, verändert aber weder den hohen Sauerstoffgehalt und den niedrigen Heizwert noch die unbefriedigende Kältestabilität. Überdies schafft sie neue Probleme durch unerwünschte Produktmerkmale wie z. B. aggressive Lösungseigenschaften, ungünstige Schmierstoffwechselwirkungen und ungünstiges Verdampfungsverhalten im Motor aufgrund zu einheitlicher Molekül-Kettenlänge typischerweise im C19-Bereich im Gegensatz zur breiten Kettenlängenverteilung eines Diesels zwischen C10 und C25. All dies führt zu einer sehr begrenzten Toleranz bei der Zumischung von Biodiesel zu Dieselkraftstoff. In Deutschland liegt die zulässige Obergrenze bei einem Biodieselgehalt von nur 7%.

Neuere Entwicklungen versuchen die Probleme durch thermochemische Umwandlungsverfahren zu lösen, bei denen zum einen der Sauerstoffgehalt der Fette reduziert oder sogar entfernt wird und zum anderen eine breite Kettenlängenverteilung entsteht, so dass am Ende Produkte gewonnen werden, die beispielsweise einem Dieselkraftstoff in hohem oder sogar unbegrenztem Maße zugemischt werden dürfen. Hier sind zwei Verfahren zu nennen, die durch Dokumente EP 1 489 157 und EP 1 396 531 offenbart werden. Diese beiden Verfahren lösen die Probleme der Viskositätsabsenkung, der Sauerstoffreduktion, der Verbesserung der Kältestabilität, der Erzeugung breiter Kettenlängenverteilungen im Dieselbereich sowie der Erhöhung zulässiger Zumischanteile im Dieselkraftstoff. Allerdings benötigen beide Verfahren teure Katalysatoren im Umwandlungsprozess, die sich mit der Zeit verbrauchen oder deaktivieren und die zudem einen erhöhten Reinigungsaufwand auf der Rohölseite zur Entfernung von Verunreinigungen, die als Katalysatorgifte wirken können, erfordern.

Im Falle von EP 1 489 157 wird Aktivkohle als Katalysator eingesetzt. Dort kommt noch erschwerend hinzu, dass das Rohöl mit Hilfe eines inerten Trägergasstromes durch das Katalysatorbett transportiert werden soll. Dazu muss das Rohöl zuvor erst einmal verdampft werden, was im Falle von Fetten bekanntlich sehr hohe Temperaturen in der Größenordnung von 500°C erfordert, wobei bereits in der Phase der Aufheizung des Rohstoffes unkontrollierte Zersetzungsreaktionen starten, noch bevor diese Verdampfungstemperatur erreicht ist. Weiterhin nachteilig ist, dass der Inertgasstrom nach der Produktabscheidung in einem internen Umlauf wieder dem Reaktor zugeführt wird. Dies bedingt größere Dimensionen für den Reaktor und für die nachfolgenden Abscheidestufen, die insbesondere aus Kondensatoren bestehen. Es ist zudem bekannt, dass zunehmende Inertgasanteile sich zunehmend ungünstig auf den Wärmetransport in Kondensatoren auswirken, wodurch sich deren Dimensionen zusätzlich stark vergrößern. Außerdem ist eine zusätzliche Gasaufbereitungsstufe zur Abtrennung der brennbaren Anteile von den unbrennbaren nötig, da ansonsten die brennbaren Anteile aufgrund des Verdünnungseffektes durch die Inertgasanteile nicht als Brenngas zur Energieversorgung eingesetzt werden könnten. All dies erhöht die Investitionskosten. Außerdem erhöhen sich dadurch auch die Betriebskosten, da der Umlaufgasanteil sowohl den Kühlaufwand in den Abscheidern als auch den Heizaufwand für die Vorwärmung vor Eintritt in den Reaktor erhöht und zudem die besagte zusätzliche Aufbereitungsstufe bedingt.

Im Falle von EP 1 396 531 werden metallische Katalysatoren eingesetzt, die besonders empfindlich auf Katalysatorgifte reagieren. Dort kommt noch erschwerend hinzu, dass teurer Druckwasserstoff für die in diesem Verfahren angestrebte Hydrodesoxygenierung benötigt wird. Demzufolge sind erhöhte Betriebsdrücke zwischen 50 und 100 bar erforderlich. Sowohl der hohe Wasserstoffverbrauch und als auch der erhöhte Druck treiben die Kosten zusätzlich zu den Katalysatoren nach oben.

In der DE 10 2009 045 399 A1 wird ein Verfahren offenbart, das der Herstellung eines Produktgemisches von Kohlenwasserstoffen aus pflanzlichen Triglyceriden dient. Diese werden in einem Reaktor in eine Schmelze aus Alkalihydroxid eingebracht, woraufhin die entstehenden Gase und kurzkettigen Kohlenwasserstoffe abgleitet werden und ein Kondensat aus C5-C19 Kohlenwasserstoffen aufgefangen wird. Das Verfahren benötigt einen inerten Trägergasstrom. Eine Sumpfphase wird jedoch nicht verwendet.

Die WO 2008/098358 A1 beschreibt ein Verfahren, bei dem unkonventionelle Kohlenwasserstoffe wie z.B. Biomasse, Bitumen oder Ölschiefer in ein Kondensat flüssiger Brennstoffe umgewandelt wird. Hierbei werden die Edukte über ein Hitzetransfermedium aus einer Alkalisalzschmelze geleitet, ohne dass es zu einer Vermischung kommt. In diesem Verfahren werden keine Rohöle verwendet, es werden Katalysatoren verwendet und die Umsetzung findet nicht in einer Sumpfphase statt.

Die WO 2009/006711 beschreibt eine Anlage zur Prozessierung von Ölabfällen in einem Thermocracking-Verfahren. Die Edukte werden durch eine bei Unterdruck betriebene Injektionsdüse in den Reaktor eingespritzt. In einer Erhitzungsvorrichtung wird eine Schmelze aus Schwermetallen vorgehalten. Die Destillation erfolgt über eine axial angebrachte Fraktionierungssäule, die bei Unterdruck betrieben wird. Dabei entstehen Benzol, Lösungsmittel und andere Leichtölfraktionen. Eine aus Schwerölen bestehende Sumpfphase als Reaktionsmedium ist in diesem Verfahren nicht vorhanden.

Bei dem Verfahren der US 2011/0184215 A1 handelt es sich um ein pyrolytisches Verfahren zur thermischen Konversion von Feststoffen aus Biomasse. Als hitzeerzeugendes Medium wird Vakuumgasöl verwendet, das bei Betriebstemperaturen von 400°C - 500°C gasförmig ist. Die Umsetzung erfolgt bei Überdrücken bis zu 20 MPa. Durch den Verbrauch des bei der Umsetzung aus dem Vakuumgasöl entstehenden Wasserstoffs ist dieses Verfahren jedoch nicht für einen kontinuierlichen Betrieb geeignet. Eine Umsetzung in einer aus Schwerölen bestehenden Sumpfphase findet nicht statt.

Die US 4,435,272 offenbart ein Verfahren zur thermischen Umwandlung, bei dem die Erhitzung über ein ringförmiges inertes Kontaktmaterial erfolgt, das einen Vorhang bildet, durch den die Ausgangsstoffe gasförmig durchgeleitet werden. Bevorzugtes Material ist Kaolin. Eine Umsetzung in einer aus Schwerölen bestehenden Sumpfphase ist nicht beschrieben.

Diese Diskussion zeigt, dass Optimierungsbedarf besteht für Verfahren, die Rohöle in hochwertige kohlenwasserstoffreiche Produktöle umwandeln sollen. Die Erfindung löst die angeführten Probleme auf überraschende und einfache Weise. Das erfindungsgemäße Verfahren sieht vor, dass eine thermische Rohölumwandlung in einer stabilisierten Sumpfphase durchgeführt wird. Überraschenderweise gelingt es dadurch, die angestrebte Rohölumwandlung sehr kostengünstig ohne Einsatz von Katalysatoren, Wasserstoff oder Trägergasströmen zu erreichen.

Das erfindungsgemäße Verfahren umfasst die in Anspruch 1 offenbarten Schritte.

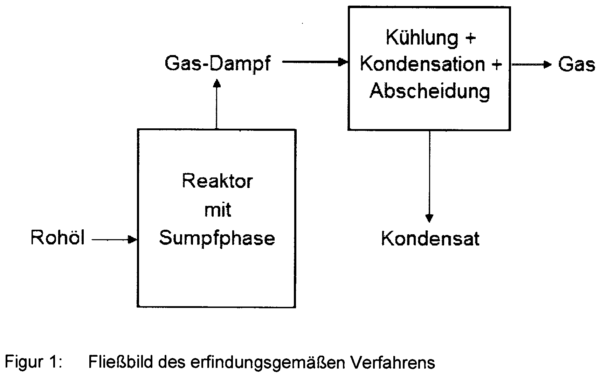

In Fig. 1 ist das erfindungsgemäße Verfahren in Form eines Blockfließbildes dargestellt.

Das Kondensat ist flüssig und besteht erfindungsgemäß mindestens aus einer Ölphase, die die Zielprodukte im Leicht- und/oder Mittelölbereich enthält. In den Fällen, in denen das Rohöl mindestens Sauerstoff als Heteroatom enthält, entsteht zusätzlich zu dieser Ölphase eine wässrige Phase, auch Wasserphase genannt, als zweite Kondensatphase, die sich unmischbar getrennt von der Ölphase ausbildet. Das erfindungsgemäße Verfahren kann im kontinuierlichen Betrieb, der durch stetige Rohstoffzufuhr und stetige Produktabfuhr gekennzeichnet ist, durchgeführt werden. Der kontinuierliche Betrieb darf aber von Zeit zu Zeit zum Beispiel zum Zwecke des Austauschs und/oder der Reinigung der Sumpfphase unterbrochen werden.

In der Regel lässt sich das erfindungsgemäße Verfahren unter Atmosphärendruck betreiben. In einigen weiter unten beschriebenen Fällen sind erhöhte oder erniedrigte Drücke empfehlenswert oder notwendig. Die erforderlichen Reaktionstemperaturen sind moderat und liegen im Bereich zwischen 200°C und 470°C, bevorzugt zwischen 300°C und 440°C, besonders bevorzugt zwischen 350°C und 410°C. Diese vergleichsweise niedrigen Temperaturen sind vor dem Hintergrund, dass keine Katalysatoren eingesetzt werden, besonders überraschend.

Die Dichte der wie oben beschrieben ggf. auftretenden wässrigen Phase ist in der Regel höher als die Dichte der Ölphase im Kondensat, so dass sich die wässrige Phase im Kondensatabscheider in der Regel unten sammelt und die Ölphase darüber steht. In seltenen Fällen, in denen die Produktöle zum Beispiel sehr aromatenreich sind, kann es umgekehrt sein.

Die abgeführte Gasphase ist ein weiteres Produkt, das bei den Umwandlungsreaktionen im Reaktor entsteht und aus der Sumpfphase freigesetzt wird. Die am Ende abgeführte Gasphase ist brennbar und kann zum Beispiel zur Energieversorgung des Prozesses eingesetzt und/oder anderen Verwendungen zugeführt werden.

Unter "Sumpfphase" wird erfindungsgemäß eine Schwerölphase verstanden, die unter Reaktionsbedingungen flüssig ist, dabei aber nicht verdampft.

Überraschenderweise wurde festgestellt, dass sich die Sumpfphase im erfindungsgemäßen kontinuierlichen Betrieb stabilisiert. Eine "stabilisierte Sumpfphase" als Reaktionsmedium ist erfindungsgemäß durch folgende Merkmale charakterisiert:
- Die Sumpfphase regeneriert, das heißt erneuert, sich selbständig im erfindungsgemäßen kontinuierlichen Betrieb.
- Die Eigenschaften der Sumpfphase und/oder die Eigenschaften der aus ihr heraus verdampften Produkte und/oder die Eigenschaften der freigesetzten Produkte ändern sich im erfindungsgemäßen kontinuierlichen Betrieb nicht.

Besonders überraschend ist die erfindungsgemäß offenbarte Tatsache, dass derartige stabilisierte Sumpfphasen in einem kontinuierlich betriebenen Rohölumwandlungsprozess überhaupt existieren oder durch den Umwandlungsprozess erzeugbar sind. Unerwartet wurde bei der erfindungsgemäßen Verfahrensweise festgestellt, dass sich im Reaktor eine vorliegende Sumpfphase auf einen stabilen Zustand hin entwickelt, bei dem sich die Eigenschaften der Sumpfphase und/oder die Eigenschaften der aus ihr heraus verdampfenden und/oder die Eigenschaften der freigesetzten Produkte schließlich nicht mehr verändern. Die Sumpfphase regeneriert sich nach Erreichen dieses stabilen Zustandes überraschenderweise selbständig über Zwischenprodukte, die bei der Rohstoffumwandlung entstehen.

Überraschenderweise wurde festgestellt, dass die erfindungsgemäße Verfahrensweise zu einer weitgehenden oder bisweilen sogar vollständigen Unterdrückung der Bildung fester Rückstände führt. In den Fällen, in denen gewisse Anteile an festen Rückständen im Reaktor entstehen, wird erfindungsgemäß im kontinuierlichen Betrieb ein Teil der Sumpfphase ausgeschleust und mittels einer Fest-flüssig-Trennung vom Rückstand befreit. Die gesäuberte Sumpfphase kann als Sumpföl optional in den Reaktor zurückgeleitet oder anderen Verwendungen wie zum Beispiel energetischer und/oder stofflicher Nutzung zugeführt werden. Alternativ zur Ausschleusung eines Teils der Sumpfphase kann auch nach Unterbrechung des kontinuierlichen Betriebes die gesamte Sumpfphase ausgeschleust werden und über eine Fest-flüssig-Trennung vom Rückstand befreit werden. In diesem Falle kann die gereinigte Sumpfphase dem Reaktor zurückgeführt werden und nötigenfalls durch neue Sumpfphase ergänzt werden und/oder komplett durch neue Startsumpfphase, wie unten beschrieben, ersetzt werden. Anwendbare Fest-flüssig-Trennungen sind zum Beispiel Filtration, Zentrifugalseparation, Gravitationsseparation, Vakuumdestillation und/oder Lösungsmittelextraktion.

Zum Anfahren eines Prozesses, legt man im Reaktor erfindungsgemäß ein Schweröl, welches unter Reaktionsbedingungen nicht verdampft und mit dem jeweils zu verarbeitenden Rohöl mischbar ist, und/oder das jeweilige Rohöl selber als Startsumpfphase im Reaktor vor, heizt diese auf Reaktionstemperatur auf und führt die oben aufgeführten erfindungsgemäßen Verfahrensschritte durch. Anwendbare Schweröle für diesen Zweck sind zum Beispiel langkettige Kohlenwasserstoffe und/oder heteroatomhaltige langkettige Kohlenwasserstoffe.

In Fällen, in denen die Sumpfphase zum Beispiel zur Polymerisation und/oder zur Ausbildung festen Rückstandes neigt, kann die erfindungsgemäße Durchführung des Verfahrens zum Beispiel dadurch erreicht werden, dass man den kontinuierlichen Betrieb von Zeit zu Zeit nach Bedarf unterbricht, um die Sumpfphase auszutauschen und/oder zu reinigen. Aber auch im anzustrebenden durchgehend kontinuierlichen Betrieb ohne Unterbrechung kann die erfindungsgemäße Ausbildung und/oder Aufrechterhaltung einer stabilisierten Sumpfphase überraschenderweise mit einfachen verfahrenstechnischen Maßnahmen erreicht werden wie zum Beispiel durch der Erhöhung oder Erniedrigung der Temperatur, die stetige Ausschleusung eines Anteils an Sumpfphase, die Zugabe von Polymerisationsinhibitoren, die Zugabe von Verkohlungsinhibitoren und/oder die Erhöhung oder Erniedrigung des Druckes.

Als Polymerisationsinhibitoren und/oder Verkohlungsinhibitoren kommen zum Beispiel Radikalfänger in Frage.

Die einfache verfahrenstechnische Maßnahme der Erhöhung oder Erniedrigung des Betriebsdruckes gegenüber Atmosphärendruck kann überraschenderweise auch dann hilfreich sein, wenn Produkteigenschaften verändert, optimiert und/oder an Anforderungen angepasst werden sollen. Soll das Produktspektrum zum Beispiel zu längerkettigen Ölen verschoben werden, lässt sich dieses zum Beispiel überraschenderweise durch eine Druckabsenkung erreichen. Diese Maßnahme der Druckabsenkung kann zum Beispiel insbesondere auch dann angezeigt sein, wenn das zu verarbeitende Rohöl thermisch sehr instabil ist, das heißt sich schon bei vergleichsweise niedrigen Temperaturen zersetzt. Sind kürzerkettige Öle gewünscht, kann umgekehrt zum Beispiel eine Druckerhöhung zum Ziel führen.

Im Falle flüchtiger Rohöle wie zum Beispiel zahlreicher Fettsäuren, die schon vor Erreichen der erforderlichen Reaktionstemperatur verdampfen, lässt sich der erfindungsgemäße Betrieb überraschenderweise auch durch einfache verfahrenstechnische Maßnahmen erreichen. Eine Möglichkeit ist zum Beispiel, dass man dem Rohöl Stabilisatoren beimischt, die dafür sorgen, dass die Mischung bei Reaktionstemperatur nicht verdampft. Als Stabilisatoren können zum Beispiel langkettige Kohlenwasserstoffe und/oder heteroatomhaltige langkettige Kohlenwasserstoffe dienen, wenn sie die erfindungsgemäßen Voraussetzungen erfüllen, mit dem Rohöl mischbar zu sein und unter Reaktionsbedingungen nicht zu verdampfen. Eine weitere Maßnahme im Falle derartiger flüchtiger Rohöle kann alternativ zur Zugabe von Stabilisatoren oder in Kombination mit der Zugabe von Stabilisatoren die Erhöhung des Betriebsdruckes sein, um die erfindungsgemäße Ausbildung und/oder Aufrechterhaltung einer stabilisierten Sumpfphase unter Durchführung der erfindungsgemäßen Verfahrensschritte zu ermöglichen. In der Regel reichen dazu schon geringe Druckerhöhungen auf 1,5 bis 5 bar. Gelegentlich wie zum Beispiel im Falle kürzerer Fettsäuren sind höhere Betriebsdrücke bis 20 bar oder in seltenen Fällen bis 100 bar nötig.

Die erfindungsgemäße Kühlung des aus dem Reaktor abgeführten Gas-Dampfgemisches einschließlich der Kondensation der Dampfanteile sowie der Abscheidung und Abführung des Kondensats kann in zwei oder mehr Stufen durchgeführt werden. Dabei wird in jeder Stufe eine bestimmte Temperatur unterhalb der jeweiligen Reaktionstemperatur, d. h. Reaktortemperatur, derart eingestellt, dass die Temperaturen von Stufe zu Stufe schrittweise abfallen. Das heißt, dass die erste Stufe bei der höchsten Temperatur und die letzte Stufe bei der niedrigsten Temperatur gefahren wird, aber auch die Temperatur der ersten Stufe schon unterhalb der Reaktionstemperatur liegt. In jeder Stufe wird dabei ein Teil des Dampfanteils kondensiert und abgeführt, wobei die jeweils übrig bleibende Gas-Dampfphase jeder Stufe in die jeweils nächste Stufe geführt wird. In der letzten Stufe wird dann der restliche in der Gas-Dampfphase verbleibende Dampfanteil kondensiert und abgeführt und die dann übrig bleibende Gasphase abgeführt. Dies wird in der Regel dadurch erreicht, dass die Temperatur der letzten Stufe auf 20°C eingestellt wird, aber nötigenfalls auch niedriger gefahren werden kann, bis das Ziel der vollständigen Kondensation der Restdampfanteile in der letzten Stufe erreicht ist. Bei einer mehrstufigen Kühlung und Kondensation, wie hier beschrieben, erreicht man eine Auftrennung der Produktölanteile im Kondensat in einzelne Siedefraktionen. Durch diese Fraktionierung des Produktöles im Leicht- und/oder Mittelölbereich kann man eine bessere Anpassung der Produkteigenschaften an gewünschte Produktanwendungen, die oben beschrieben sind, erreichen und den Aufwand der Produktfraktionierung durch nachträgliche Destillation oder Rektifikation vermindern. Überraschenderweise wurde festgestellt, dass man die Produkteigenschaften im Hinblick auf die Absenkung der Heteroatomanteile verbessern kann, wenn man die hier beschriebene zwei- oder mehrstufige Kühlung und Kondensation durchführt und dabei das Kondensat einer und/oder mehrerer Stufen vollständig oder in Teilen in den Reaktor zurückführt.

Die erfindungsgemäß erreichten Produktqualitäten sind trotz der Einfachheit des Verfahrens überraschend gut. Obwohl keine Katalysatoren und kein Druckwasserstoff eingesetzt werden, findet eine überraschend starke Absenkung von Heteroatomanteilen statt, die einhergeht mit einer signifikanten Erhöhung des Heizwertes. Die Viskosität wird deutlich abgesenkt, oft bis auf das Niveau eines konventionellen Dieselkraftstoffes, und die Kältestabilität wird deutlich verbessert. Außerdem erreicht man erfindungsgemäß trotz der vergleichsweise niedrigen Reaktionstemperaturen überraschenderweise die gewünschte breite Molekülkettenlängenverteilung im Leicht- und/oder Mittelölbereich.

Die erzeugten Produktöle können unter anderem in allen der oben unter der Produktdefinition aufgeführten Anwendungsbereiche eingesetzt werden. Dies kann entweder unmittelbar ohne weitere Aufbereitung der erfindungsgemäß gewonnenen Produktöle geschehen oder nach weiterer Aufbereitung.

Ein weiteres vorteilhaftes Merkmal des erfindungsgemäßen Verfahrens ist dessen überraschende Flexibilität im Sinne der Anwendbarkeit auf unterschiedlichste Rohöle, die oben unter der Definition des Begriffes "Rohöl" aufgeführt sind. Ein weiterer Vorteil ist die Unempfindlichkeit des erfindungsgemäßen Verfahrens gegenüber Verunreinigungen im Rohöl, da bei dem erfindungsgemäßen Verfahren zum Beispiel keine Katalysatoren eingesetzt werden, so dass zum Beispiel Katalysatorgifte keine Rolle spielen. Demzufolge ist es sogar möglich, gebrauchte Rohöle wie zum Beispiel Altöle, gebrauchte Schiffsöle, gebrauchte Frittieröle, Fette aus Fettabscheidern und/oder viele andere Abfallöle eingesetzt werden.

### Beispiele:

Die Erfindung wird anhand der folgenden drei Ausführungsbeispiele näher erläutert, in denen die erfindungsgemäße Verfahrensweise experimentell an drei unterschiedlichen Rohölen - jeweils unter Atmosphärendruck - umgesetzt wird.

### Experimentelles Ausführungsbeispiel 1: Raffiniertes Rapsöl

Im experimentellen Ausführungsbeispiel 1 wird raffiniertes Rapsöl als Rohöl eingesetzt. Zunächst werden 8 kg dieses Rohöls als Startsumpfphase in einem Laborreaktor vorgelegt und auf Reaktionstemperatur von 370°C aufgeheizt. Nach Erreichen der Reaktionstemperatur beginnt die kontinuierliche Zufuhr von 1 kg/h Rohöl. Aufgrund der in der Sumpfphase stattfindenden Umwandlungsreaktionen entstehen das Produktöl im Leicht- und Mittelölbereich, Wasser und ein brennbares Gas. Produktöl und Wasser verdampfen im Reaktor und werden zusammen mit dem gebildeten Gas über die Gas-Dampfphase oben aus dem Reaktor kontinuierlich herausgeleitet. Diese Gas-Dampfphase läuft über zwei Kühlstufen. Die erste Stufe wird auf 250°C gehalten und die zweite auf 20°C. In der ersten Stufe kondensiert ein Teil der Dampfphase und das gebildete Kondensat, bestehend aus einem ÖI im oberen Mittelölbereich, wird abgeschieden sowie vollständig und kontinuierlich in den Reaktor zurückgeführt. In der zweiten Stufe wird der Rest der Dampfanteile kondensiert. Das Kondensat der zweiten Stufe, bestehend aus, dem Produktöl im Leicht- und Mittelölbereich sowie einer Wasserphase, wird abgeschieden und kontinuierlich abgeführt. Das abgeschiedene Kondensat besteht aus zwei unmischbaren übereinander stehenden Flüssigphasen, wobei die Produktölphase aufgrund geringerer Dichte die obere Phase ausbildet und die Wasserphase aufgrund höherer Dichte die untere. Das nach der zweiten Stufe verbleibende nicht kondensierende Gas wird kontinuierlich abgeführt. Im weiteren Verlauf des kontinuierlichen Betriebs wird die Reaktionstemperatur derart nachjustiert, dass die ständig überwachte Sumpfphasenmenge im Reaktor konstant bleibt. Dies führt zu einer allmählichen Anhebung der Reaktionstemperatur auf 374°C, bis nach einiger Zeit der stationäre, das heißt zeitlich konstante Betrieb erreicht wird, in dem sich weder die Eigenschaften des kondensierten und abgeführten Produktöles noch die Reaktionstemperatur ändern. Insgesamt wird der kontinuierliche Betrieb über 50 Stunden aufrecht erhalten. Danach wird der Versuch beendet, indem dem die Rohölzufuhr gestoppt und gleichzeitig der Reaktor gekühlt wird, so dass aufgrund sinkender Temperatur keine Umwandlungsreaktionen mehr stattfinden. Am Ende wird der Reaktor entleert.

### Die Versuchsauswertung ergibt folgende Massenbilanz:

Zusätzlich zur Anfangsfüllung werden dem Reaktor insgesamt kontinuierlich 50 kg Rohöl zugeführt. Die Sumpfphasenmenge bleibt konstant bei 8 kg einschließlich einer geringen Menge an festem Rückstand von 0,1 kg, der sich im Verlauf des Versuches in der Sumpfphase gebildet hat. Die Menge des gesammelten Produktöles beträgt 40,2 kg, die Menge der Wasserphase 2,5 kg und die per Differenz ermittelte Gasmenge 7,3 kg.

### Die Analysen ergeben folgende Daten:

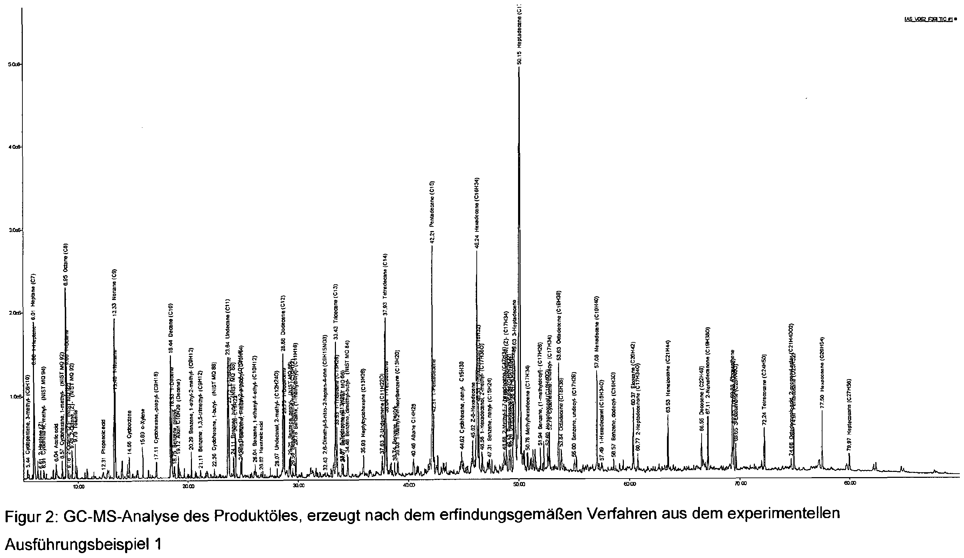

Das Rohöl hat einen Sauerstoffgehalt von 10,9 Gew.% und einen unteren Heizwert von 37,1 MJ/kg. Das Produktöl hat 4,5 Gew.% Sauerstoff, einen unteren Heizwert von 40,9 MJ/kg, eine Dichte von 842,5 kg/m<3>, eine Viskosität bei 40°C von 3,6 mm<2>/s, eine Cetanzahl von 61,5, einen unteren Siedeanfang von 81°C sowie ein oberes Siedeende von 373°C. Die GC-MS-Analyse für das Produktöl ist in Fig. 2 gezeigt. Dort ist zu erkennen, dass überwiegend gesättigte, unverzweigte Alkane und in geringerem Maße Alkene entstanden sind. Fettsäuren und Fettsäurederivate sind weitgehend zurückgedrängt. Die Analysedaten insgesamt bestätigen, dass das Produktöl im Leicht- und Mittelölbereich liegt.

Produktöl-Anwendungstests in einem Dieselmotor zeigen, dass das Produktöl als Dieselersatz und auch als Zumischkomponente bzw. als Additiv von konventionellem Dieselkraftstoff geeignet ist. Bereits vergleichsweise geringe Zumischanteile von 5 Vol.% Produktöl in konventionellem Dieselkraftstoff zeigt eine vorteilhafte emissionsmindernde Wirkung. Gegenüber dem Motorenbetrieb mit reinem konventionellem Diesel zeigt der Betrieb mit 5 Vol.% von Produktöl im Dieselkraftstoff eine relative Reduktion der Emission an NOx um 5% bis 20% und an unverbrannten Kohlenwasserstoffen um 50% bis 70%.

### Experimentelles Ausführungsbeispiel 2: Altfett

Im experimentellen Ausführungsbeispiel 2 wird Altfett eingesetzt. Das Altfett stammt überwiegend aus dem Gastronomiebereich. Es wird nur grob mechanisch durch Filtration gereinigt und dann als Rohöl dem erfindungsgemäßen Verfahren unterzogen. Zunächst werden 8 kg dieses Rohöls als Startsumpfphase in einem Laborreaktor vorgelegt und auf Reaktionstemperatur von 365°C aufgeheizt. Nach Erreichen der Reaktionstemperatur beginnt die kontinuierliche Zufuhr von 1 kg/h Rohöl. Aufgrund der in der Sumpfphase stattfindenden Umwandlungsreaktionen entstehen das Produktöl im Leicht- und Mittelölbereich, Wasser und ein brennbares Gas. Produktöl und Wasser verdampfen im Reaktor und werden zusammen mit dem gebildeten Gas über die Gas-Dampfphase oben aus dem Reaktor kontinuierlich herausgeleitet. Diese Gas-Dampfphase läuft über zwei Kühlstufen. Die erste Stufe wird auf 250°C gehalten und die zweite auf 20°C. In der ersten Stufe kondensiert ein Teil der Dampfphase und das gebildete Kondensat, bestehend aus einem ÖI im oberen Mittelölbereich, wird abgeschieden sowie vollständig und kontinuierlich in den Reaktor zurückgeführt. In der zweiten Stufe wird der Rest der Dampfanteile kondensiert. Das Kondensat der zweiten Stufe, bestehend aus, dem Produktöl im Leicht- und Mittelölbereich sowie einer Wasserphase, wird abgeschieden und kontinuierlich abgeführt. Das abgeschiedene Kondensat besteht aus zwei unmischbaren übereinander stehenden Flüssigphasen, wobei die Produktölphase aufgrund geringerer Dichte die obere Phase ausbildet und die Wasserphase aufgrund höherer Dichte die untere. Das nach der zweiten Stufe verbleibende nicht kondensierende Gas wird kontinuierlich abgeführt. Im weiteren Verlauf des kontinuierlichen Betriebs wird die Reaktionstemperatur derart nachjustiert, dass die ständig überwachte Sumpfphasenmenge im Reaktor konstant bleibt. Dies führt zu einer allmählichen Anhebung der Reaktionstemperatur auf 369°C, bis nach einiger Zeit der stationäre, das heißt zeitlich konstante Betrieb erreicht wird, in dem sich weder die Eigenschaften des kondensierten und abgeführten Produktöles noch die Reaktionstemperatur ändern. Insgesamt wird der kontinuierliche Betrieb über 50 Stunden aufrecht erhalten. Danach wird der Versuch beendet, indem dem die Rohölzufuhr gestoppt und gleichzeitig der Reaktor gekühlt wird, so dass aufgrund sinkender Temperatur keine Umwandlungsreaktionen mehr stattfinden. Am Ende wird der Reaktor entleert.

### Die Versuchsauswertung ergibt folgende Massenbilanz:

Zusätzlich zur Anfangsfüllung werden dem Reaktor insgesamt kontinuierlich 50 kg Rohöl zugeführt. Die Sumpfphasenmenge bleibt konstant bei 8 kg einschließlich einer geringen Menge an festem Rückstand von 0,3 kg, der sich im Verlauf des Versuches in der Sumpfphase gebildet hat. Die Menge des gesammelten Produktöles beträgt 39,5 kg, die Menge der Wasserphase 2,7 kg und die per Differenz ermittelte Gasmenge 7,8 kg.

### Die Analysen ergeben folgende Daten:

Das Rohöl hat einen Sauerstoffgehalt von 11,2 Gew.% und einen unteren Heizwert von 36,8 MJ/kg. Das Produktöl hat 4,9 Gew.% Sauerstoff, einen unteren Heizwert von 40,6 MJ/kg, eine Dichte von 842,1 kg/m<3>, eine Viskosität bei 40°C von 3,5 mm<2>/s, einen unteren Siedeanfang von 76°C sowie ein oberes Siedeende von 370°C. Die Analysedaten insgesamt bestätigen, dass das Produktöl im Leicht- und Mittelölbereich liegt.

### Experimentelles Ausführungsbeispiel 3: Gebrauchtes Schiffsöl

Im experimentellen Ausführungsbeispiel 3 wird gebrauchtes Schiffsöl als Rohöl eingesetzt. Zunächst werden 8 kg dieses Rohöls als Startsumpfphase in einem Laborreaktor vorgelegt und auf Reaktionstemperatur von 395°C aufgeheizt. Nach Erreichen der Reaktionstemperatur beginnt die kontinuierliche Zufuhr von 1 kg/h Rohöl. Aufgrund der in der Sumpfphase stattfindenden Umwandlungsreaktionen entstehen das Produktöl im Leicht- und Mittelölbereich, Wasser und ein brennbares Gas. Produktöl und Wasser verdampfen im Reaktor und werden zusammen mit dem gebildeten Gas über die Gas-Dampfphase oben aus dem Reaktor kontinuierlich herausgeleitet. Diese Gas-Dampfphase läuft über zwei Kühlstufen. Die erste Stufe wird auf 250°C gehalten und die zweite auf 20°C. In der ersten Stufe kondensiert ein Teil der Dampfphase und das gebildete Kondensat, bestehend aus einem ÖI im oberen Mittelölbereich, wird abgeschieden sowie vollständig und kontinuierlich in den Reaktor zurückgeführt. In der zweiten Stufe wird der Rest der Dampfanteile kondensiert. Das Kondensat der zweiten Stufe, bestehend aus, dem Produktöl im Leicht- und Mittelölbereich sowie einer Wasserphase, wird abgeschieden und kontinuierlich abgeführt. Das abgeschiedene Kondensat besteht aus zwei unmischbaren übereinander stehenden Flüssigphasen, wobei die Produktölphase aufgrund geringerer Dichte die obere Phase ausbildet und die Wasserphase aufgrund höherer Dichte die untere. Das nach der zweiten Stufe verbleibende nicht kondensierende Gas wird kontinuierlich abgeführt. Im weiteren Verlauf des kontinuierlichen Betriebs wird die Reaktionstemperatur derart nachjustiert, dass die ständig überwachte Sumpfphasenmenge im Reaktor konstant bleibt. Dies führt zu einer allmählichen Anhebung der Reaktionstemperatur auf 397°C, bis nach einiger Zeit der stationäre, das heißt zeitlich konstante Betrieb erreicht wird, in dem sich weder die Eigenschaften des kondensierten und abgeführten Produktöles noch die Reaktionstemperatur ändern. Insgesamt wird der kontinuierliche Betrieb über 50 Stunden aufrecht erhalten. Danach wird der Versuch beendet, indem dem die Rohölzufuhr gestoppt und gleichzeitig der Reaktor gekühlt wird, so dass aufgrund sinkender Temperatur keine Umwandlungsreaktionen mehr stattfinden. Am Ende wird der Reaktor entleert.

### Die Versuchsauswertung ergibt folgende Massenbilanz:

Zusätzlich zur Anfangsfüllung werden dem Reaktor insgesamt kontinuierlich 50 kg Rohöl zugeführt. Die Sumpfphasenmenge bleibt konstant bei 8 kg einschließlich einer geringen Menge an festem Rückstand von 0,7 kg, der sich im Verlauf des Versuches in der Sumpfphase gebildet hat. Die Menge des gesammelten Produktöles beträgt 41,4 kg, die Menge der Wasserphase 0,4 kg und die per Differenz ermittelte Gasmenge 8,2 kg.

### Die Analysen ergeben folgende Daten:

Das Rohöl hat einen Sauerstoffgehalt von 0,95 Gew.%, einen Schwefelgehalt von 1,2 Gew.%, einen Stickstoffgehalt von 0,25 Gew.%, eine Dichte von 929,1 kg/m<3>, eine Viskosität bei 40°C von 72,2 mm<2>/s und einen unteren Heizwert von 41,5 MJ/kg. Das Produktöl hat einen Sauerstoffgehalt von 0,27 Gew.%, einen Schwefelgehalt von 0,71 Gew.%, einen Stickstoffgehalt von 0,10 Gew.%, einen unteren Heizwert von 42,3 MJ/kg, eine Dichte von 858,0 kg/m<3>, eine Viskosität bei 40°C von 3,1 mm<2>/s, einen unteren Siedeanfang von 92°C sowie ein oberes Siedeende von 389°C. Die Analysedaten insgesamt bestätigen, dass das Produktöl im Leicht- und Mittelölbereich liegt.

## Patentansprüche

1. Verfahren zur thermischen Umwandlung von heteroatomhaltigen Rohölen in heteroatomarme Leicht- und/oder Mittelöle, **dadurch gekennzeichnet, dass**
- ein heteroatomhaltiges Rohöl, das eine hydrophobe und/oder kohlenwasserstoffhaltige Flüssigkeit ist und aus einer Gruppe bestehend aus heteroatomhaltigen Schwerölen, Fetten, Fettsäuren, Fettsäureverbindungen, heteroatomhaltigen Fettbegleitstoffen, Tallölen, Harzsäuren und/oder Gemischen aus den genannten Stoffen ausgewählt wird, in einen Reaktor gefördert wird, in dem eine Sumpfphase auf Reaktionstemperatur gehalten wird, wobei die Sumpfphase eine Schwerölphase ist, die unter Reaktionsbedingungen flüssig ist, nicht verdampft und die Stabilisierung der Sumpfphase beim Anfahren des Verfahrens dadurch herbeigeführt wird, dass als Startsumpfphase das zu verarbeitende Rohöl und/oder ein Schweröl, das mit dem Rohöl mischbar ist, eingesetzt wird, **dadurch gekennzeichnet, dass** die Sumpfphase stabilisiert ist, **dadurch gekennzeichnet, dass** sich ihre Eigenschaften und/oder die Eigenschaften der aus ihr heraus verdampften Produkte und/oder die Eigenschaften der freigesetzten Produkte im kontinuierlichen Betrieb nicht ändern,
- die aus einer thermischen Umwandlung bei einer Reaktionstemperatur zwischen 200°C bis 470°C, bevorzugt zwischen 300°C und 440°C, ganz besonders bevorzugt zwischen 350°C und 410°C, entstandenen Zielprodukte im Leicht- und/oder Mittelölbereich aus der Sumpfphase heraus verdampfen und über die freigesetzte Gas-Dampfphase aus dem Reaktor abgeführt werden,
wobei die besagte thermische Umwandlung ohne Einsatz von weder Katalysatoren, Wasserstoff noch Trägergasströmen erreicht wird,
- die freigesetzte Gas-Dampfphase gekühlt wird, die Dampfanteile kondensieren und ein gebildetes Kondensat bestehend aus heteroatomarmen Leicht- und/oder Mittelölen abgeschieden und abgeführt wird,
wobei die besagten heteroatomarmen Leicht- und/oder Mittelöle im Vergleich zu dem besagten eingesetzten heteroatomhaltigen Rohöl einen verringerten Sauerstoff-, Schwefel-, Stickstoff-, Phosphor- und/oder Halogengewichtsanteil aufweisen,
und
- die nicht kondensierende Gasphase abgeführt wird.

2. Verfahren nach Anspruch 1, **dadurch gekennzeichnet, dass** das Verfahren im kontinuierlichen Betrieb durchgeführt wird, **gekennzeichnet durch** stetige Rohölzufuhr und stetige Produktabfuhr.

3. Verfahren nach einem der vorhergehenden Ansprüche, **dadurch gekennzeichnet, dass** sich im Falle der Verwendung von sauerstoffhaltigen Rohölen in dem Kondensat zusätzlich zur Ölphase eine wässrige Phase unmischbar getrennt von der Ölphase ausbildet.

4. Verfahren nach einem der vorhergehenden Ansprüche, **dadurch gekennzeichnet, dass** der Betriebsdruck Atmosphärendruck ist.

5. Verfahren nach einem der Ansprüche 1 bis 3, **dadurch gekennzeichnet, dass** der Betriebsdruck niedriger oder höher als Atmosphärendruck ist.

6. Verfahren nach einem der vorhergehenden Ansprüche, **dadurch gekennzeichnet, dass** im kontinuierlichen Betrieb ein Teil der Sumpfphase stetig ausgeschleust wird.

## Claims

1. A method for the thermal conversion of heteroatom-containing crude oils into low-heteroatom light and/or middle oils, **characterized in that**
- a heteroatom-containing crude oil which is a hydrophobic and/or hydrocarboncontaining liquid and is selected from a group consisting of heteroatom-containing heavy oils, fats, fatty acids, fatty acid compounds, heteroatom-containing heterolipids, tall oils, resin acids and/or mixtures of said substances is fed into a reactor in which a sump phase is maintained at reaction temperature, said sump phase being a heavy oil phase which is liquid and does not evaporate under reaction conditions, and the stabilization of the sump phase is brought about during the start-up of the process by using as starter sump phase the crude oil to be processed and/or a heavy oil which is miscible with the crude oil, **characterized in that** the sump phase is stabilized, **characterized in that** its properties and/or the properties of the products evaporated from it and/or the properties of the released products do not change during continuous operation,
- the target products in the light and/or medium oil range resulting from a thermal conversion at a reaction temperature between 200°C and 470°C, preferred between 300°C and 440°C, particularly preferred between 350°C and 410°C, evaporate out of the sump phase and are discharged from the reactor via the released gas-vapor phase, said thermal conversion being achieved without the use of either catalysts, hydrogen or carrier gas streams,
- the released gas-vapor phase is cooled, the vapor components are condensed and a formed condensate consisting of low-heteroatom light and/or middle oils is separated and discharged, said low-heteroatom light and/or middle oils having a reduced oxygen, sulfur, nitrogen, phosphorus and/or halogen weight content compared to said heteroatom-containing crude oil used, and
- the non-condensing gas phase is discharged.

2. Method according to claim 1, **characterized in that** the method is carried out in continuous operation, **characterized by** continuous crude oil supply and continuous product removal.

3. Method according to one of the preceding claims, **characterized in that**, in the case of the use of oxygen-containing crude oils in the condensate, in addition to the oil phase, an aqueous phase forms immiscibly separated from the oil phase.

4. Method according to one of the preceding claims, **characterized in that** the operating pressure is atmospheric pressure.

5. Method according to any one of claims 1 to 3, **characterized in that** the operating pressure is lower or higher than atmospheric pressure.

6. Method according to one of the preceding claims, **characterized in that** in continuous operation a part of the sump phase is continuously transferred out.

## Revendications

1. Procédé pour la conversion thermique d'huiles brutes contenant des hétéroatomes en huiles légères et/ou moyennes à faible teneur en hétéroatomes, **caractérisé en ce que**
- une huile brute contenant des hétéroatomes, qui est un liquide hydrophobe et/ou contenant des hydrocarbures et qui est choisi dans un groupe constitué par des huiles lourdes contenant des hétéroatomes, des graisses, des acides gras, des composés d'acides gras, des hétérolipides contenant des hétéroatomes, des tallöls, des acides résiniques et/ou des mélanges desdites substances, est introduit dans un réacteur dans lequel une phase de carter est maintenue à la température de réaction, ladite phase de carter étant une phase d'huile lourde qui est liquide et ne s'évapore pas dans les conditions de réaction, et la stabilisation de la phase de carter est réalisée pendant le démarrage du procédé en utilisant comme phase de carter de démarrage l'huile brute à traiter et/ou une huile lourde qui est miscible avec l'huile brute, **caractérisé en ce que** la phase de carter est stabilisée, **caractérisé en ce que** ses propriétés et/ou les propriétés des produits qui s'en évaporent et/ou les propriétés des produits libérés ne changent pas pendant le fonctionnement continu,
- les produits cibles dans la gamme des huiles légères et/ou moyennes résultant d'une conversion thermique à une température de réaction comprise entre 200°C et 470°C, de préférence entre 300°C et 440°C, de manière particulièrement préférée entre 350°C et 410°C, s'évaporent de la phase de carter et sont évacués du réacteur par l'intermédiaire de la phase gaz-vapeur libérée, ladite conversion thermique étant réalisée sans l'utilisation de catalyseurs, d'hydrogène ou de courants de gaz porteur,
- la phase gaz-vapeur libérée est refroidie, les composants de la vapeur sont condensés et un condensat formé constitué d'huiles légères et/ou moyennes à faible teneur en hétéroatomes est séparé et déchargé, lesdites huiles légères et/ou moyennes à faible teneur en hétéroatomes ayant une teneur pondérale réduite en oxygène, en soufre, en azote, en phosphore et/ou en halogène par rapport audite huile brute utilisée contenant des hétéroatomes, et
- la phase gazeuse sans condensation est déchargée.

2. Procédé selon la revendication 1, **caractérisé en ce que** le procédé est mis en oeuvre en fonctionnement continu, **caractérisé par** une alimentation continue en huile brute et une évacuation continue du produit.

3. Procédé selon l'une des revendications précédentes, **caractérisé en ce que**, dans le cas de l'utilisation d'huiles brutes contenant de l'oxygène dans le condensat, outre la phase huileuse, il se forme une phase aqueuse séparée de manière immiscible de la phase huileuse.

4. Procédé selon l'une des revendications précédentes, **caractérisé en ce que** la pression de fonctionnement est la pression atmosphérique.

5. Procédé selon l'une des revendications 1 à 3, **caractérisé en ce que** la pression de fonctionnement est inférieure ou supérieure à la pression atmosphérique.

6. Procédé selon l'une des revendications précédentes, **caractérisé en ce qu'**en fonctionnement continu, une partie de la phase de carter est évacuée en continu.
